# EUROPEAN PATENT APPLICATION

(11) **EP 1 381 043 A2**
(43) Date of publication of application: **14.01.2004**
(21) Application number: 02017725.9
(22) Date of filing: 08.08.2002
(51) Int. Cl.: G11B 19/00, G11B 7/00, G11B 7/28

(54) **Transfer apparatus for digital image data**

(30) Priority: 08.07.2002 CN 02141194
(71) Applicant: Chang, Cheng-Chun, Wen-Shan DT, Taipei (TW)
(72) Inventor: Chang, Cheng-Chun, Wen-Shan DT, Taipei (TW)
(74) Representative: Helms, Joachim, Dipl.-Ing. Patentanwalt

(57) **Abstract**

A transfer apparatus for digital image data includes a card read and a burning apparatus. The card read further includes at least a socket slot, a circuit board with a control chip connecting with the socket slot, a power supply supplying a direct current with a steady voltage to the circuit board and a control switch for power on and off and for controlling start and stop of a burning operation. The burning apparatus is a burning apparatus for compact disks and has a circuit wire being connected to the circuit board. The control chip has burning firmware to offer the burning apparatus a recording program for performing recording procedure for compact disks. Once a memory card of an image taking device is inserted into the socket slot and the control switch is started to on the power, the card read can read the digital image data in the memory card and the digital image data is transmitted to the burning apparatus via the circuit board and related wires such that the image data can be recorded to the compact disks.

## Description

### BACKGROUND OF THE INVENTION

### 1. Field of the Invention:

The present invention relates to a transfer apparatus for digital image data and particularly to a storage loader such as a flash memory card for a digital image taking device, with which the storage loader is inserted into a socket slot of a card read and the digital image data can be recorded to compact disks in a burning apparatus as soon as control switch is started.

### 2. Description of Related Art:

Due to the technology brings forth the new through the old incessantly, the camera or the video is changed to digital image type from the conventional analog image type. The change makes us possible to browse, edit or montage the image data by ourselves instead of asking the professional for help. Hence, the digital image data can be taken at any time and at any place to enhance lively memories and pleasures in our life.

Taking the currently so-called DV as an example, the advantage of the DV is the DV tape is used as the storage loader thereof and it is possible to record and play a scene video for a long period of time. However, the disadvantage of the DV is it takes long time to transfer the image data in the DV tape to a VCD compatible for MEPG II format by way of a USB or i-Link (IEEE 1394) preset on the DV being connected to a computer. For a person familiar to the video technique, it takes about 8 hours to transfer the image data to a 640 MB (74 min) compact disk. Hence, it is very difficult to perform the image data transfer operation for an ordinary person and this is a problem of the DV denounced by people.

Besides, taking the digital video or camera as an example, mostly a memory card usually is used for storage or buffer of digital image. For the digital camera, the image file can occupy a memory space from several hundred KBs to several tens of MBs based on the increased picture quality so that the memory card is often becomes insufficient in the space thereof. In addition, a kind of digital video uses a memory card with a memory capacity of 640 MB or 512 MB as the data storage loader instead of the DV tape. Although the kind of digital video can save a lot of time for the image data being transferred to the compact disk, the high capacity memory card is very expensive without economic benefits. Accordingly, limited memory capacity and high price of the conventional memory cards used in the digital camera or digital video (designated as image taking device hereinafter) quite bother the users.

The Taiwan Utility Model Application No. 090201833 (corresponding to U.S. Patent Application No. 09/794,352 and to European Patent Application No. 01104430) filed by the present invention has been granted and the present inventor is encouraged to endeavor in overcoming the problems of limited memory capacity and high price resulting from the memory card of the conventional digital image taking device.

### SUMMARY OF THE INVENTION

Accordingly, an object of the present invention is to provide a transfer apparatus for digital image data includes a card read and a burning apparatus. The card read further includes at least a socket slot, a circuit board with a control chip connecting with the socket slot, a power supply supplying a direct current with a steady voltage to the circuit board and a control switch for power on and off and for controlling start and stop of a burning operation. The burning apparatus is a burning apparatus for compact disks and has a circuit wire being connected to the circuit board. The control chip has burning firmware to offer the burning apparatus a recording program for performing recording procedure for compact disks. Once a memory card of an image taking device is inserted into the socket slot and the control switch is started to on the power, the card read can read the digital image data in the memory card and the digital image data is transmitted to the burning apparatus via the circuit board and related wires such that the image data can be recorded to the compact disks.

### BRIEF DESCRIPTION OF THE DRAWINGS

The present invention can be more fully understood by reference to the following description and accompanying drawings, in which:
Fig. 1 is a perspective view of a transfer apparatus for digital image data according to the present invention showing the facial side thereof;
Fig. 2 is a perspective view of a transfer apparatus for digital image data according to the present invention showing the rear side thereof;
Fig. 3 is a block diagram for a control circuit in the transfer apparatus of the present invention; and
Fig. 4 is a perspective view illustrating another embodiment of the present invention.

### DETAILED DESCRIPTION OF THE PREFERRED EMBODIMENT

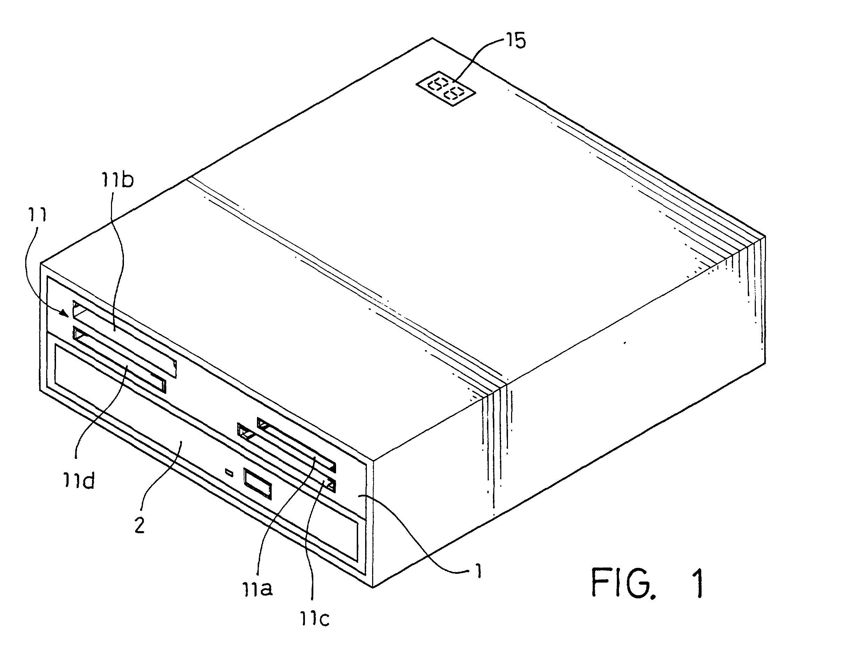

Referring to Figs. 1 to 3, a transfer apparatus for a digital image according to the present invention basically includes a card read 1 and a burning apparatus 2.

Wherein, the card read 1 is a device for reading or writing data from a memory card such as a multi-media card (MMC card), a secure digital card (SD), a smart media card (SM card), a compact flash card (CF card) including Type I and Type II CF card, or a memory stick card (MS Card) so that the card read 1 at the front side thereof at least has a socket slot 11 for being inserted with a suitable card. In order to enhance the adaptability thereof for all types of memory cards, the card read 1 at the front side thereof can be provided with four socket slots 11a-11d for being inserted with all types of memory cards. For instance, the socket slot 11a is inserted with MS card, the socket slot 11b is inserted with Type I or II CF card, the socket slot 11c is inserted with SD card or MMC card and the socket slot 11d is inserted with a MMC card.

The difference of the transfer apparatus of the present invention from the prior art is in that a control chip 13 with firmware arranged on the circuit board 12 disposed in the card read 1 for supplying burning program to the burning apparatus 2 in addition to a basic function of at least a socket slot 11 being fixedly attached to the circuit board 12 for the card read 1 being able to read data in a memory card or write data into the memory card. Further, the control chip 13 can control the card read 1 containing the memory card M and burning apparatus 2 to perform burning operations according to desired instructions by way of built-in control program execution or a shift switch 14, for instance, a finger stir switch being operated to select operation options such as burning speed, simulation, burning and data comparison. A display 15 can be used to show the operation status with numbers, ER, CH, CR and VR standing for burning speed, error, simulation, burning and comparison respectively. The display 15 does not have to be the liquid crystal display and the conventional light emit diode (LED) can be instead such that flashes of the light standing for a specific operation being in operation.

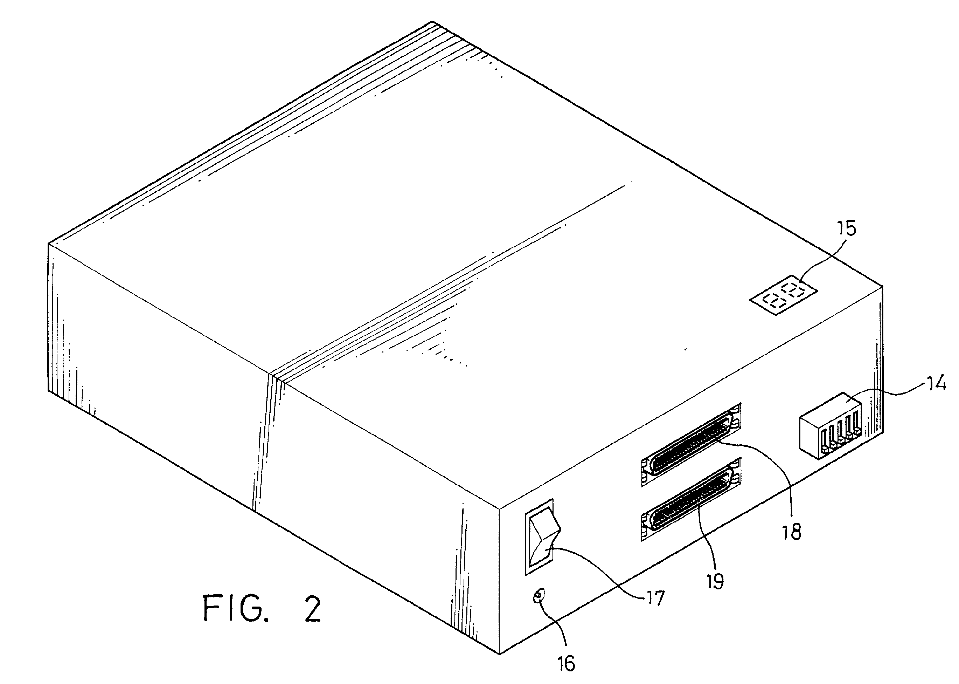

Further, the card read 1 has a power supply section 16 as shown in Fig. 2 and the power supply section 16 is a connection plug for connecting the direct current (DC) with stabilized voltage after a transformer. The direct current passes a control switch 17 for controlling on and off of the power source and start and stop of the burning process. Alternately, the direct current can be obtained by way of the alternate current (AC) power source from the power company being rectified and voltage-reduced with a rectifying circuit disposed in the card read 1 before supplying to the circuit board 12.

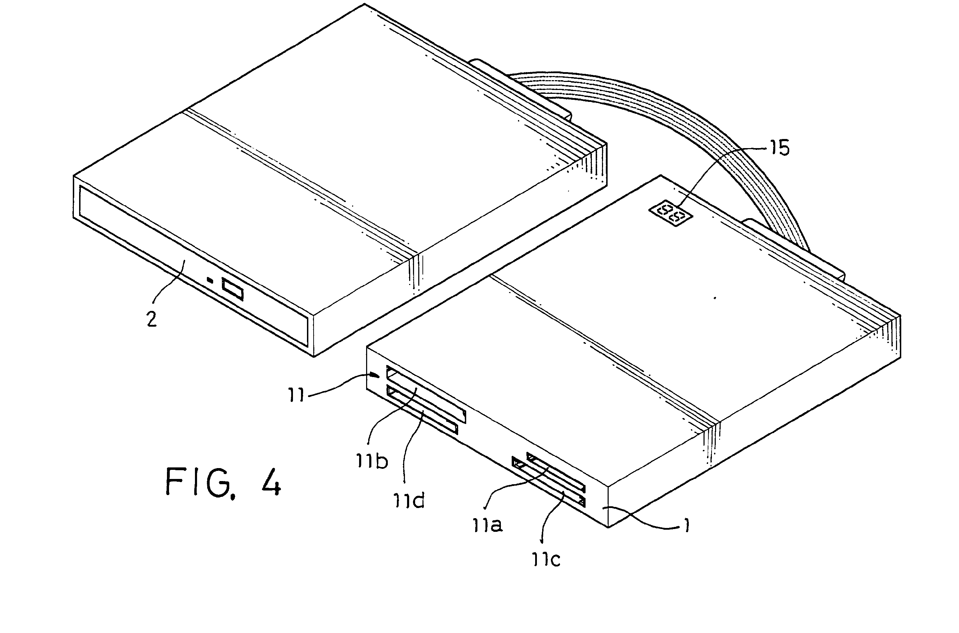

Besides, the card read 1 is provided with a signal connector 18 so as to read data in the memory card M or write date into the memory card M via the conventional signal wire connecting with a computer. Further, in case of the card read 1 and the burning apparatus 2 are arranged separately as shown in Fig. 4, a pin connector 19 has to be mounted for the signal being able to transmitted to the burning apparatus 2 with wiring.

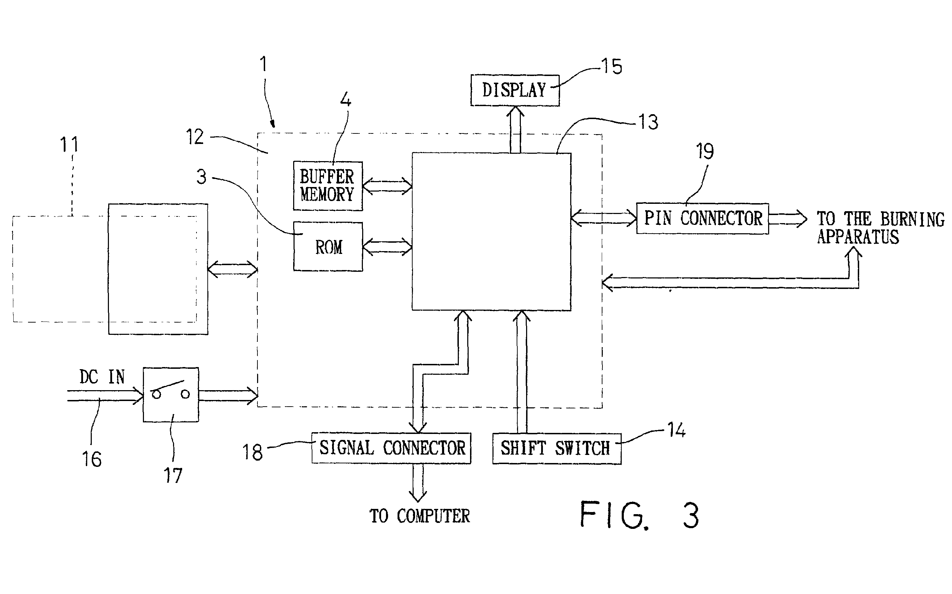

Referring to Fig. 3, the burning firmware may be arranged at a read only memory (ROM) 3 on the circuit board 12 for offering burning program to the burning apparatus 2. Wherein, the ROM 3 preferably is a flash memory in practice such that a new version of the firmware can be updated via the INTERNET or any other record loader such as a disk as long as the signal connector 18 connecting with the computer. Alternatively, the circuit board 12 can be provided with an additional buffer memory 4 for making up original buffer memory in the burning apparatus 2 in case of the original buffer memory being insufficient such that burning failure can be avoided. Further, the buffer memory 4 preferably is a flash memory.

Referring to Figs. 1 and 2 again, the transfer apparatus is an integral unit of the card read 1 and the burning apparatus 2 with a covering to enhance the stability of burning and to lessen the complexity of the wiring. In order to facilitate the usefulness for connecting with the computer, a separation type as shown in Fig. 4 can be applied, that is, the card read and the burning apparatus can be used individually before being connected to each other.

The burning apparatus 2 is a conventional burning apparatus such as CD-R, CD-RW, DVD-R or DVD-RW for compact disks. There are circuit lines in the burning apparatus 2 to be connected to the circuit board 12 of the card read 1 for receiving control signals and digital image signals from the circuit board 12 and the data being possible to be recorded to corresponding compact disks. Of course, these are the prior art so that no further detail will be described. In order to increase the function of the burning apparatus as shown in Fig. 4, a pin connector 21 and a power input socket 22 can be provided so that the burning operation can be performed directly after being connected to the computer.

While the transfer apparatus of the present invention is in use, the memory card M, which is in a image taking device originally, is taken out and inserted into the socket slot 11 and the power is connected to the power supply part 16, and then the card read 1 can read the digital image data saved in the memory card M as soon as the control switch 17 is pressed down such that the digital image data can be transmitted to the burning apparatus 2 via the circuit board 12 and data further can be recorded to the compact disk in the burning apparatus 2. Further, the memory card M is taken out from the socket slot11 and placed in the image taking device before the original image data being possible to be deleted and a further video recording or picture taking being possible to be reset. Meantime, the shift switch 14 can be adjusted to select one of the options such as burning speed, simulation, burning and data comparison before the control switch can be pressed down such that an automatic operation of burning can be carried out very conveniently with the display 15 appearing the entire process of burning and the result of burning.

It is appreciated from the preceding detailed description that the transfer apparatus of the present invention is capable of reducing a great deal of memories in the image taking device and the image data in the memory card can be recorded to compact disks by way of the burning apparatus to facilitate subsequent operations including browse, edit, montage and arrangement. Further, it is not necessary for the transfer apparatus of the present invention to be connected to the computer via a connector (a USB or l-Link) of the image taking device inconveniently. Furthermore, once the transfer apparatus of the preset invention is used, it is not required for the user to spend a lot of money for buying excessive memory cards in addition to break through the restriction of memory card capacity of the image taking device.

While the invention has been described with reference to a preferred embodiment thereof, it is to be understood that modifications or variations may be easily made without departing from the spirit of this invention, which is defined by the appended claims.

## Claims

1. A transfer apparatus for digital image data, comprising
a card read, further comprising at least a socket slot, a circuit board with a control chip connecting with the socket slot, a power supply supplying a direct current with a steady voltage to the circuit board and a control switch for power on and off and for controlling start and stop of a burning operation;
a burning apparatus, being a burning apparatus for compact disks and having a circuit wire being connected to the circuit board;
wherein, the control chip has recording firmware to offer the burning apparatus a burning program for performing a recording procedure for compact disks;
whereby, a memory card of an image taking device is inserted into the socket slot and the control switch is started to on the power, the card read can read the digital image data in the memory card and the digital image data is transmitted to the burning apparatus via the circuit board and related wires such that the image data can be recorded to the compact disks.

2. The transfer apparatus for digital image data as defined in claim 1, wherein the memory card is MMC card, a SD card, a SM card, a type I or Type II CF card or a MS card.

3. The transfer apparatus for digital image data as defined in claim 1, wherein it is preferable that four socket slots are provided for being inserted with different types of memory cards.

4. The transfer apparatus for digital image data as defined in claim 1, wherein the card read and the burning apparatus are arranged as an integral unit enclosed with an outer shell covering.

5. The transfer apparatus for digital image data as defined in claim 1, wherein the card read is separated from the burning apparatus to be connected to each other by way of a ribbon wire.

6. The transfer apparatus for digital image data as defined in claim 1, wherein the burning apparatus is a CD-R, a CD-RW, a DVD-R or a DVD-RW.

7. The transfer apparatus for digital image data as defined in claim 1, wherein the card read can provide at least a shift switch being used for selecting one of options and a basis of the burning operation.

8. The transfer apparatus for digital image data as defined in claim 1, wherein the card read further has a signal connector to connect a computer with a signal wire.

9. The transfer apparatus for digital image data as defined in claim 1, wherein the card read can be provided with a display for displaying a status of data burning promptly.

10. The transfer apparatus for digital image data as defined in claim 8, wherein the display is a liquid crystal display.

11. The transfer apparatus for digital image data as defined in claim 8, wherein the display is a group of indicator lights.

12. The transfer apparatus for digital image data as defined in claim 1, wherein the power supply part is a connecting socket.

13. The transfer apparatus for digital image data as defined in claim 1, wherein the power supply part is a rectified transformer built in a control box for connecting a direct current after being rectified and voltage-reduced.

14. The transfer apparatus for digital image data as defined in claim 1, wherein the burning firmware can be disposed in a read only memory of the circuit board.

15. The transfer apparatus for digital image data as defined in claim 1, wherein the circuit board further has a buffer memory to increase a data storage space for a read only compact disk.

16. The transfer apparatus for digital image data as defined in claim 14, wherein the read only memory and the buffer memory are flash memories.

17. The transfer apparatus for digital image data as defined in claim 15, wherein the read only memory and the buffer memory are flash memories.
